# FASCICULE DE BREVET EUROPEEN

(11) **EP 0 411 997 B1**
(45) Date de publication et mention de la délivrance du brevet: **19.10.1994**
(21) Numéro de dépôt: 90402176.3
(22) Date de dépôt: 27.07.1990
(51) Int. Cl.: F16F 13/00

(54) **Perfectionnements apportés aux manchons antivibratoires hydrauliques**
Änderungen an hydraulischen Antischwingungsbuchsen
Modifications of bush-type hydraulic vibration dampers

(30) Priorité: 31.07.1989 FR 8910302
(43) Date de publication de la demande: 06.02.1991
(73) Titulaire: HUTCHINSON, F-75008 Paris (FR)
(72) Inventeur: Thelamon, Jean, F-28220 Douy (FR); Salaud, Jean-Luc, F-78700 Conflans Sainte Honorine (FR); Dubos, Daniel, F-92500 Asnieres (FR)
(74) Mandataire: Behaghel, Pierre

(56) Documents cités:
- EP-A- 0 248 714
- EP-A- 0 353 700
- GB-A- 2 200 190
- PATENT ABSTRACTS OF JAPAN vol. 11, no. 296 (M-627)(2743) 25 septembre 1987,& JP-A-62 88834 (BRIDGESTONE) 23 avril 1987,
- PATENT ABSTRACTS OF JAPAN vol. 11, no. 157 (M-590)(2604) 21 mai 1987,& JP-A-61 286633 (NISSAN) 17 décembre 1986,
- PATENT ABSTRACTS OF JAPAN vol. 13, no. 170 (M-817)(3518) 21 avril 1989,& JP-A-01 3342 (TOKAI RUBBER) 09 janvier 1989,
- PATENT ABSTRACTS OF JAPAN vol. 13, no. 100 (M-805)(3448) 09 mars 1989,& JP-A-63 289349 (TOKAI RUBBER) 25 novembre 1988,
- PATENT ABSTRACTS OF JAPAN vol. 12, no. 495 (M-780)(3342) 23 décembre 1988,& JP-A-63 214531 (BRIDGESTONE) 07 septembre 1988,

## Description

L'invention est relative aux manchons antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère conformé de façon à former avec celles-ci au moins deux poches étanches opposées diamétralement selon une direction D et communiquant entre elles par un canal étroit, l'ensemble desdites poches et dudit canal étant rempli d'un liquide amortisseur.

De tels manchons sont destinés à être montés entre deux pièces rigides solidarisables respectivement avec les deux armatures et susceptibles de subir l'une par rapport à l'autre des oscillations orientées selon la direction diamétrale D, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour une fréquence donnée des oscillations, fréquence dont la valeur F est directement liée aux cotes dudit canal, un phénomène de résonance propre à amortir la transmission de ces oscillations de l'une des armatures à l'autre.

Les manchons du genre en question sont par exemple destinés à être interposés entre, d'une part, un châssis de véhicule et, d'autre part, le moteur à combustion interne ou le train avant ou arrière de ce véhicule.

L'invention concerne, parmi les manchons ci-dessus, ceux dans lesquels la portion du corps en élastomère qui délimite l'une au moins des poches -dite ci-après "première poche"- présente en section axiale la forme générale d'un U ou V ouvert radialement vers l'extérieur, la portion du corps en élastomère, qui délimite la deuxième poche, étant constituée par une membrane flexible mince, et dans lesquels le canal étroit est composé d'au moins deux canaux étroits s'étendant chacun, au moins approximativement et au moins en partie, selon un arc de cercle transversal admettant pour axe l'axe de l'armature tubulaire externe, chaque arc étant situé près de cette armature et près d'une extrémité axiale de ladite armature.

De tels manchons ont été décrits dans la demande de brevet EUROPE n° 0 248 714.

Dans ces manchons, on trouve deux canaux étroits montés en parallèle entre une même première poche et une même deuxième poche.

L'effet global obtenu par ces deux canaux est alors comparable à celui qui serait obtenu par un canal unique en ce sens que le manchon considéré permet d'amortir essentiellement des oscillations correspondant à une fréquence donnée unique.

Or, il peut être intéressant d'amortir à l'aide d'un tel manchon des oscillations correspondant à deux fréquences distinctes.

Il a déjà été proposé à cet effet de remplacer la "première poche" unique d'un tel support par deux "premières poches" indépendantes communiquant respectivement avec la deuxième poche par l'intermédiaire de deux canaux étroits distincts, les cotes de chaque canal étant prévues de façon à assurer l'amortissement optimum du support pour des oscillations d'une fréquence donnée et les valeurs F₁ et F₂ de cette fréquence étant différentes pour les deux canaux.

Dans les modes de réalisation qui ont été proposés pour mettre en oeuvre cette solution, les réglages sont difficiles et les constructions relativement compliquées.

L'invention a pour but, surtout, de remédier à ces inconvénients.

A cet effet, on tire parti du fait que, dans les manchons décrits ci-dessus, on dispose déjà d'au moins deux canaux étroits distincts reliant une même première poche -savoir celle délimitée en partie par la portion en U ou V du corps en élastomère- à une même deuxième poche, ces deux canaux pouvant s'étendre selon deux arcs différents d'un même cercle ou selon deux arcs appartenant à des cercles distincts parallèles : on divise ici la première poche en deux poches indépendantes dans lesquelles débouchent respectivement les deux canaux étroits et les cotes de chacun de ces deux canaux, cotes correspondant à l'amortissement optimum d'oscillations d'une fréquence donnée, sont telles que les valeurs F₁ et F₂ de cette fréquence soient différentes pour les deux canaux.

La division de la première poche en deux poches indépendantes est également très simple : en effet, cette première poche est délimitée, d'une part, par une portion de l'armature externe ou d'une pièce mince rapportée intérieurement contre cette armature et, d'autre part, par une portion du corps en élastomère disposé à l'intérieur de ladite armature et, pour diviser en deux ladite poche, il suffit d'ajouter audit corps un voile étanche venu de moulage avec lui et s'étendant à partir de sa zone centrale jusqu'à l'armature tubulaire externe.

Dans des modes de réalisation avantageux, la deuxième poche est en outre elle-même divisée en deux compartiments dans lesquels débouchent respectivement les deux canaux, cette division étant notamment réalisée par un voile étanche venu de moulage avec le corps en élastomère et s'étendant à partir d'une portion centrale de ce corps jusqu'à l'armature tubulaire externe

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Les figures 1 et 2, de ce dessin, montrent un manchon antivibratoire hydraulique établi selon l'invention, respectivement en coupe axiale selon I-I figure 2 et en coupe transversale selon II-II figure 1.

La figure 3 est une coupe axiale partielle du même manchon selon III figure 2.

Le manchon en question comprend :
- une armature métallique tubulaire interne de révolution 1,
- une armature métallique tubulaire externe de révolution 2 qui entoure l'armature 1 et qui, pour l'état monté et chargé du manchon, peut être coaxiale à cette armature 1, les axes des deux armatures étant de toute façon parallèles entre eux au repos du manchon,
- et un corps en élastomère 3 reliant l'une à l'autre les deux armatures 1 et 2 en ménageant entre celles-ci deux poches étanches A, B diamètralement opposées selon une direction D.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur ou bras de suspension de véhicule et que le châssis de ce véhicule.

Une partie du corps 3, qui est supposée ici à titre purement illustratif être sa moitié supérieure, présente sous charge une forme en partie de révolution autour de l'axe commun aux deux armatures 1 et 2 avec une demi-section axiale en forme de U ou de V, deux gorges 4 ouvertes axialement vers l'extérieur du manchon étant évidées dans les deux faces frontales 5 de ladite portion.

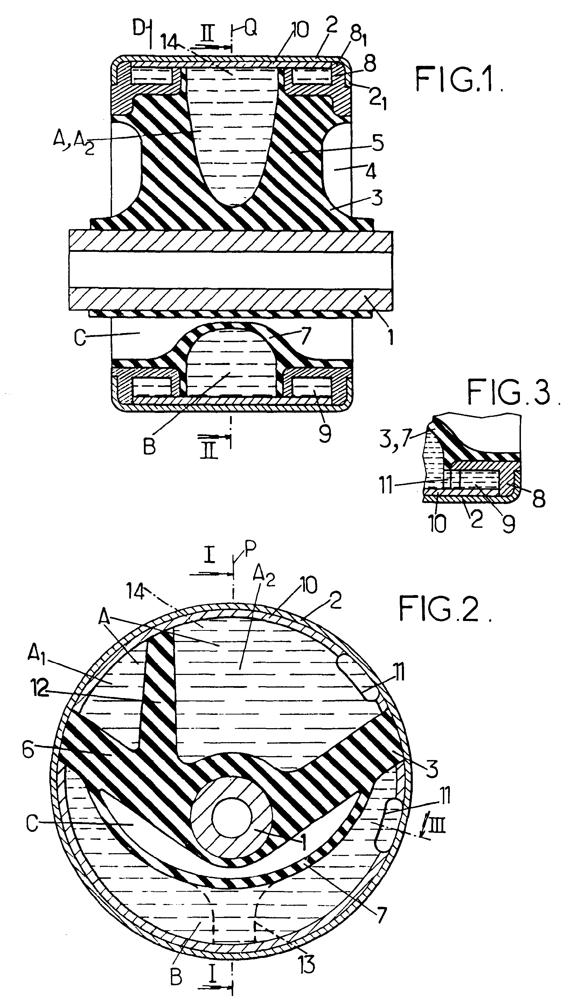

Cette portion comprend également deux bras radiaux 6 diamètralement opposés ou s'étendant selon un Y largement ouvert ainsi que visible sur la figure 2, bras qui délimitent avec les faces 5 et l'armature externe 2 la chambre A.

La portion du corps 3 qui délimite la chambre B est constituée par une membrane flexible mince 7.

Cette membrane se présente sous la forme d'un bandeau incurvé en demi-cercle et légèrement bombé vers l'axe. Ce bandeau présente deux bords semi-circulaires reliés de façon étanche à l'armature externe 2 et les deux extrémités dudit bandeau considérées selon la direction circonférentielle sont raccordées aux bras radiaux 6, une poche C ouverte axialement à l'air libre étant ainsi ménagée entre ces bras et la membrane 7.

Deux profilés circulaires 8 sont rapportés aux deux extrémités axiales de l'armature externe 2, à l'intérieur de cette armature, de façon à former avec cette dernière deux canaux circulaires étroits 9.

Dans le mode de réalisation illustré, chaque profilé 8 présente en demi-section axiale la forme d'un U ouvert radialement vers l'extérieur et comporte un disque 8₁ faisant légèrement saillie vers l'extérieur et serti entre un bord 2₁ rabattu vers l'intérieur d'une extrémité axiale de l'armature externe 2 et la tranche terminale en regard d'un fourreau cylindrique ajouré 10 formant entretoise et introduit jointivement dans cette armature.

Ce fourreau 10 enveloppe jointivement les deux profilés 8 de manière à les fermer de façon étanche radialement vers l'extérieur.

Ledit fourreau n'est pas continu sur toute son étendue circonférentielle, mais composé de deux morceaux incurvés ou tuiles entre lesquels sont disposées les extrémités des bras 6, comme visible sur la figure 2.

Comme visible également sur la figure 2, chacun des deux canaux 9 débouche latéralement par des orifices 11 dans respectivement les deux chambres A et B.

Au lieu que la chambre A soit unique et que les deux canaux 9 débouchant dans cette chambre A soient identiques, comme dans les constructions antérieures,
- on divise ici la chambre A en deux compartiments A₁ et A₂ en ajoutant très simplement au corps 3 en élastomère un voile 12 s'étendant entre une portion centrale du corps 3 et l'armature externe 2 ou plus précisément le fourreau 10,
- on fait déboucher les deux canaux 9 dans respectivement ces deux chambres A₁ et A₂,
- et l'on donne aux cotes de ces deux canaux des valeurs correspondant à l'amortissement optimum d'oscillations correspondant à respectivement deux fréquences distinctes.

Ces deux fréquences sont avantageusement :
- une première fréquence F₁ de l'ordre de 5 à 15 Hertz correspondant au "hachis", c'est-à-dire aux trépidations créées par les irrégularités du sol sur lequel se déplace le véhicule considéré, phénomène que l'on a avantage à amortir au maximum,
- et une seconde fréquence F₂ de l'ordre de 25 à 35 Hertz correspondant aux vibrations dues au fonctionnement du moteur au ralenti lorsque le véhicule est à l'arrêt, vibrations vis-à-vis desquelles on a avantage à créer une rigidité ou raideur minimum.

Les deux orifices 11 par lesquels chaque canal 9 débouche respectivement dans la chambre B et dans le compartiment A₁ ou A₂ peuvent être écartés angulairement l'un par rapport à l'autre autour de l'axe du manchon de tout angle désirable, cet angle étant par exemple de l'ordre de 45° comme illustré, mais pouvant être beaucoup plus grand et même supérieur à 180° ou 270°.

Comme chaque profilé 8 s'étend ici sur un cercle complet, des bouchons (non représentés) sont introduits dans ce profilé pour délimiter les extrémités des canaux 9.

Sur la figure 2 on voit seulement les embouchures 11 du canal 9 desservant le compartiment A₂, ce canal étant logé dans le profilé 8 de droite de la figure 1 : l'autre canal 9, desservant le compartiment A₁, est logé dans le profilé 8 de gauche de ladite figure 1, et ses embouchures dans ledit compartiment A₁ ne sont donc pas visibles sur la figure 2.

On peut facilement régler les fréquences F₁ et F₂ en jouant sur les positions des bouchons qui délimitent les extrémités des canaux 9 et/ou sur les étend dues et positions des embouchures 11.

Selon une variante, les deux canaux 9 pourraient être constitués par deux tronçons distincts d'un même profilé 8, ces deux tronçons pouvant déboucher dans la chambre B à travers un même orifice 11.

On pourrait envisager que l'un au moins des deux canaux 9 s'étende sur plus de 360 degrés, ce canal se présentant alors, notamment, sous la forme d'une hélice.

Les deux compartiments A₁ et A₂ pourraient avoir des volumes identiques et symétriques l'un de l'autre par rapport à un plan qui pourrait être le plan axial bissecteur P du large V formé par les bras 6 en section transversale (figure 2), ou encore le plan transversal bissecteur Q du V ou U délimitant la face intérieure de la chambre A ci-dessus selon une section axiale (figure 1), le voile 12, de forme générale plate, ayant alors son plan moyen confondu avec ledit plan P ou Q.

Mais ledit plan moyen du voile 12 peut également être parallèle à l'un de ces plans ou incliné sur l'un desdits deux plans, tout en demeurant de préférence axial ou transversal.

Dans le mode de réalisation illustré, les volumes des deux compartiments A₁ et A₂ sont différents : on voit sur la figure 2 que le plan moyen du voile 12, de forme générale plate, est sensiblement parallèle au plan P ci-dessus, mais décalé par rapport à ce plan.

En suite de quoi et quel que soit le mode de réalisation adopté, on dispose finalement d'un manchon antivibratoire hydraulique dont la constitution et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés elle en embrasse, au contraire, toutes les variantes, notamment celles où la deuxième chambre B serait, tout comme la chambre A, divisée en deux compartiments desservis respectivement par les deux canaux 9, notamment par une cloison intermédiaire 13 venue de moulage avec le corps 3 et s'étendant parallèlement à l'axe du manchon et radialement à partir de la zone centrale de la membrane 7 jusqu'à l'armature tubulaire externe 2 ou le fourreau qui tapisse intérieurement cette armature.

## Revendications

1. Manchon antivibratoire hydraulique comprenant deux armatures rigides tubulaires (1,2) s'entourant l'une l'autre et réunies entre elles par un corps en élastomère (3) conformé de façon à former avec celles-ci au moins deux poches étanches (A,B) opposées diamétralement et communiquant entre elles par un canal étroit, l'ensemble desdites poches et dudit canal étant rempli d'un liquide amortisseur, la portion du corps en élastomère qui délimite l'une au moins des poches (A) -dite ci-après "première poche"- présentant en section axiale la forme générale d'un U ou V ouvert radialement vers l'extérieur, la portion du corps en élastomère (3), qui délimite la deuxième poche (B), étant constituée par une membrane flexible mince (7), et le canal étroit étant composé d'au moins deux canaux étroits (9) qui s'étendent chacun, au moins approximativement et au moins en partie, selon un arc de cercle transversal admettant pour axe l'axe de l'armature tubulaire externe (2), chaque arc étant situé près de ladite armature et près d'une extrémité axiale de cette armature, caractérisé en ce que la première poche (A) est divisée en deux poches indépendantes (A₁,A₂) dans lesquelles débouchent respectivement les deux canaux étroits (9) et en ce que les cotes de chacun de ces deux canaux, cotes correspondant à l'amortissemnt optimum d'oscillations d'une fréquence donnée, sont telles que les valeurs (F₁ et F₂) de cette fréquence soient différentes pour les deux canaux.

2. Manchon selon la revendication 1, caractérisé en ce que la première poche est divisée en deux par un voile étanche (12) venu de moulage avec le corps en élastomère (3) et s'étendant à partir de la zone centrale de ce corps jusqu'à l'armature tubulaire externe (2).

3. Manchon selon la revendication 2, caractérisé en ce que le voile (12) de forme générale plate, a son plan moyen parallèle à l'axe du manchon.

4. Manchon selon la revendication 2, caractérisé en ce que le voile (12) de forme générale plate, a son plan moyen perpendiculaire à l'axe du manchon.

## Patentansprüche

1. Hydraulische Antischwingungsbuchse, die aus zwei starren rohrförmigen Armaturen (1, 2) besteht, von denen die eine die andere umgibt und die untereinander durch einen Körper (3) aus elastomerem Material miteinander verbunden sind, der so gestaltet ist, daß er mit den Armaturen wenigstens zwei dichte Taschen (A, B) bildet, die sich diametral gegenüberliegen und miteinander über einen engen Durchgang in Verbindung stehen, wobei die Taschen und der Durchgang mit einer Dämpfungsflüssigkeit gefüllt sind, der Teil des Körpers aus elastomerem Material, der wenigstens eine der Taschen (A) - im folgenden "erste Tasche" genannt - begrenzt im axialen Querschnitt gesehen, die allgemeine Form eines radial nach außen offenen U oder V hat, der Abschnitt des Körpers (3) aus elastomerem Material, der die zweite Tasche (B) begrenzt, aus einer dünnen biegsamen Membran (7) besteht und der verengte Durchgang aus wenigstens zwei engen Kanälen (9) gebildet ist, die sich beide wenigstens annähernd und wenigstens teilweise in einem querverlaufenden Kreisbogen erstrecken, dessen Achse mit der Achse der äußeren rohrförmigen Armatur (2) zusammenfällt, wobei jeder Kreisbogen in der Nähe der Armatur und in der Nähe eines axialen Endes dieser Armatur liegt, dadurch gekennzeichnet, daß die erste Tasche (A) in zwei voneinander unabhängige Taschen (A₁, A₂) unterteilt ist, in die jeweils die beiden engen Kanäle (9) münden und daß die Abmessungen jeder der beiden Kanäle, die der optimalen Dämpfung von Schwingungen mit einer gegebenen Frequenz entsprechen, so gewählt sind, daß die Werte (F₁ und F₂) dieser Frequenz für die beiden Kanäle unterschiedlich sind.

2. Hydraulische Antischwingungsbuchse nach Anspruch 1, dadurch gekennzeichnet, daß die erste Tasche durch einen dichten Flansch (12), der aus einem Stück durch Verformung mit dem Körper (3) aus elastomerem Material hergestellt ist und sich ausgehend von der mittleren Zone des Körpers bis zu der äußeren rohrförmigen Armatur (2) erstreckt, in zwei Taschen unterteilt ist.

3. Hydraulische Antischwingungsbuchse nach Anspruch 2, dadurch gekennzeichnet, daß die Mittelebene des Flansches (12), der eine allgemein flache Form hat, parallel zur Achse der Buchse verläuft.

4. Hydraulische Antischwingungsbuchse nach Anspruch 2, dadurch gekennzeichnet, daß die Mittelebene des Flansches (12), der eine allgemein flache Form hat, senkrecht zur Achse der Buchse verläuft.

## Claims

1. Hydraulic antivibratory sleeve comprising two rigid tubular frames (1, 2), one surrounding the other, and joined together by an elastomer body (3) shaped so as to form therewith at least two diametrically opposite sealed pockets (A, B) communicating together through a narrow channel, the assembly of said pockets and said channel being filled with a damping liquid, the portion of the elastomer body which defines one at least of the pockets (A) -called hereafter "first pocket"- having in axial section the general form of a radially outwardly open U or V, the portion of the elastomer body (3), which defines the second pocket (B), being formed by a thin flexible membrane (7), and the narrow channel being formed of at least two narrow channels (9) each extending, at least approximately and at least partially, along a transverse arc of a circle having as axis the axis of the external tubular frame (2), each arc being situated close to said frame and close to an axial end of said frame, characterized in that the first pocket (A) is divided into two independent pockets (A₁, A₂) into which the two narrow channels (9) open respectively and in that the dimensions of each of these two channels, which dimensions correspond to optimum damping of oscillations of a given frequency, are such that the values (F₁ and F₂) of this frequency are different for the two channels.

2. Sleeve according to claim 1, characterized in that the first pocket is divided into two by a sealed web (12) integrally moulded with the elastomer body (3) and extending from the central zone of this body as far as the external tubular frame (2).

3. Sleeve according to claim 2, characterized in that the generally flat shaped web (12) has its mean plane parallel to the axis of the sleeve.

4. Sleeve according to claim 2, characterized in that the generally flat shaped web (12) has its mean plane perpendicular to the axis of the sleeve.
